# EUROPÄISCHE PATENTSCHRIFT

(11) **EP 0 484 651 B1**
(45) Veröffentlichungstag und Bekanntmachung des Hinweises auf die Patenterteilung: **14.12.1994**
(21) Anmeldenummer: 91115041.5
(22) Anmeldetag: 06.09.1991
(51) Int. Cl.: B60N 2/42, B60R 21/02

(54) **Sicherheitsvorrichtung an einem Kraftfahrzeug**
Safety device on a motor vehicle
Dispositif de sécurité sur un véhicule automobile

(30) Priorität: 12.10.1990 DE 4032381
(43) Veröffentlichungstag der Anmeldung: 13.05.1992
(73) Patentinhaber: AUDI AG, 85002 Ingolstadt (DE)
(72) Erfinder:
(74) Vertreter: Engelhardt, Harald

(56) Entgegenhaltungen:
- DE-A- 1 530 927
- DE-A- 2 301 270
- DE-A- 3 643 876
- US-A- 4 300 788
- US-A- 4 509 798

## Beschreibung

Die Erfindung betrifft eine Sicherheitsvorrichtung an einem Kraftfahrzeug nach dem Oberbegriff des Anspruchs 1(DE-A-2 301 270).

Bei schwereren Unfällen werden Fahrzeuginsassen gegenüber dem Fahrgastraum beschleunigt und können dann gegen Fahrzeugteile prallen. Bekannte Sicherheitsvorrichtungen haben allgemein das Ziel, die für die Fahrzeuginsassen auftretenden Beschleunigungen gegenüber dem Fahrgastraum zu verringern, und/oder einen Aufprall auf Fahrzeugteile zu dämpfen.

Allgemein bekannte Sicherheitsvorrichtungen sind Sicherheitsgurte als Rückhaltesysteme, die teilweise insgesamt an den Sitzen angebracht sind und sich somit mit diesen bei einer Sitzverstellung mitbewegen.

Als Alternativen oder zusätzlich zu Sicherheitsgurten sind Auffangplatten oder Auffangbügel etwa im Brustbereich eines sitzenden Fahrzeuginsassen bekannt. Solche Auffangplatten können stationär angebracht und mit Dämpfungselementen versehen sein (DE-B-1 806 657). In einer anderen Ausführungsform sind Auffangplatten schwenkbar angebracht (DE-A-1 923 312) und müssen von einem Fahrzeuginsassen von einer Ruhestellung in eine Wirkstellung manuell gebracht werden. Bei einem gattungsgemäßen Gegenstand (DE-B-1 153 276) ist ein Auffangbügel mit einer Fahrzeugtür gekoppelt, dergestalt, daß beim Öffnen der Fahrzeugtür der Auffangbügel aus dem Einstiegsbereich weggeschwenkt und nach Schließen der Fahrzeugtür in seine Wirkstellung gebracht wird. Bei einer weiteren Art von Sicherheitsvorrichtungen werden Platten (DE-A-2 601 314, DE-A-2 656 771, DE-A-2 613 759), Bügel (DE-A-1 958 460, JP-A-62-128853) oder Netze (DE-A-2 229 261, DE-A-1 966 469) in einer vorgespannten Position gehalten und erst bei einem Aufprall durch eine Auslösung über Beschleunigungssensoren schlagartig in eine Wirkposition vor oder am Fahrzeuginsassen gebracht. Ähnlich arbeitet auch der allgemein bekannte Gassack (Airbag), der mit Hilfe einer pyrotechnischen Treibladung bei einem durch einen Sensor erfaßten Unfall vor einem Fahrzeuginsassen aufgeblasen wird.

Weiter ist es bekannt (US-A-4 509 798), Abstützelemente in Abhängigkeit des Schaltzustands eines Sitzbelastungsschalters selbsttätig von einer Ruhestellung in eine Wirkstellung zu verstellen.

Sicherheitsvorrichtungen wirken im wesentlichen bei einem Front- oder Heckaufprall, d. h. bei einer Beschleunigung der Fahrzeuginsassen in Fahrzeuglängsrichtung. In diesen Richtungen sind die Fahrzeuginsassen durch die als lange Deformationszonen ausgebildeten Front- und Heckbereiche des Fahrzeugs sowie die darin enthaltenen schweren Gegenstände, wie beispielsweise die Brennkraftmaschine und das Getriebe, relativ gut geschützt. Besonders ungünstig für einen Fahrzeuginsassen ist dagegen ein Seitenaufprall, bei dem ein anderes Fahrzeug von der Seite her im Türbereich aufprallt, da dort zwischen Tür und Fahrzeugsitz bzw. zwischen Tür und Fahrzeuginsasse nur ein geringer Abstand besteht und zudem der Türbereich aus Gewichts- und Platzgründen nicht beliebig steif ausführbar ist.

Um die Verletzungsgefahr bei einem Seitenaufprall zu verringern, ist es bekannt, Dämpfungselemente, beispielsweise flüssigkeitsgefüllte Aufprallkörper (DE-A-1 780 386), im möglichen seitlichen Aufprallbereich an der Tür und den Fensterrahmen anzubringen.

Diese Maßnahmen verhindern jedoch nicht, daß bei einem Seitenaufprall der Fahrzeuginsasse in Richtung auf das aufprallende Fahrzeug seitlich beschleunigt wird. Anschließend wird dann der Fahrzeuginsasse in seiner beschleunigten Bewegung von einem möglicherweise entgegenkommenden einbeulenden Türkasten mit erheblicher Verletzungsgefahr abrupt abgebremst. Am meisten ist hier der Beckenbereich des Fahrzeuginsassen gefährdet, der etwa in der Höhe einer seitlich eindringenden Stoßstange liegt. Um diese Gefahr zu verringern, ist es bei der gattungsbildenden Vorrichtung bekannt (DE-A-2 301 270; Fig. 19), an der Seite der Sitzlehne einen plattenförmigen Bügel als von Hand verschwenkbaren, einseitigen Hebel vorzusehen, der in seiner Wirkstellung etwa waagrecht von der Sitzlehne nach vorne absteht. Der Beckenbereich ist dadurch nicht optimal abgestützt. Für die Einleitung der bei einem Aufprall auf den Bügel wirkenden, sehr hohen Kräfte, ist diese Anordnung ungünstig bzw. sind die Schwenklager für den Bügel sehr stabil, stark und schwer für die Aufnahme dieser Kräfte zu dimensionieren. Weiter geht von dem frei abstehenden Bügelende wieder eine Verletzungsgefahr aus. Die Handhabung ist zudem unbequem, wodurch eine Benutzung nicht sichergestellt ist.

Aufgabe der Erfindung ist es, eine für die Krafteinleitung und die Beckenabstützung verbesserte Anordnung zu schaffen.

Diese Aufgabe wird mit den Merkmalen des kennzeichnenden Teils des Anspruchs 1 gelöst.

Gemäß Anspruch 1 liegt die Schwenkachse für den Bügel am vorderen Ende des Sitzflächenteils oder im oberen Bereich des Sitzlehnenteils.

Für das der Schwenkachse gegenüberliegende, freie Ende des Bügels ist ein zugeordnetes Verhakungselement (Lasche) am oberen Bereich des Sitzlehnenteils (wenn die Schwenkachse am vorderen Ende des Sitzflächenteils liegt) oder am vorderen Ende des Sitzflächenteils angeordnet (wenn die Schwenkachse im oberen Bereich des Sitzlehnenteils liegt). Das freie Ende des Bügels ist in der Wirkstellung hinter das Verhakungselement geführt und greift dort ein.

Die Wirkung des Bügels liegt darin, daß ein Fahrzeuginsasse bei einem Seitenaufprall nicht vom Fahrzeugsitz in Richtung auf den angrenzenden Fahrzeugseitenbereich beschleunigt wird und vom Fahrzeugsitz seitlich herunterrutscht, wo ihn ansonst in der beschleunigten Bewegung der in die Fahrgastzelle ausbeulende Seitenbereich mit hoher Aufprallgeschwindigkeit abrupt abbremst. Durch die selbsttätige Verstellung des Bügels von einer Ruhestellung, die das Einnehmen und Verlassen des Fahrzeugsitzes nicht behindert, in eine Wirkstellung für die Abstützung, wird wie bisher eine bequeme und vom Abstützelement praktisch nicht beeinflußte Benutzung des Fahrzeugsitzes ermöglicht.

In der Ruhestellung, bei der das Abstützelement das Einnehmen oder Verlassen der Sitzposition nicht stören soll, liegt dieses zweckmäßig etwa waagrecht unterhalb und entlang der Sitzfläche oder senkrecht entlang der Sitzlehne. In der Wirkstellung wird das Abstützelement dann so ausgeschwenkt, daß es bevorzugt den Bereich, an dem die Sitzlehne an die Sitzfläche angrenzt, etwa dreiecksförmig zur Abstützung des Beckens abdeckt. Dazu liegt die endseitig am Bügel angebrachte Schwenkachse entweder etwa am vorderen Ende der Sitzfläche oder im oberen Bereich der Sitzlehne.

Durch die Verschwenkung des freien Endes des Bügels hinter ein am Fahrzeugsitz fest angebrachtes Verhakungselement erfolgt in der Wirkstellung auch dort im Belastungsfall ein Formschluß, wodurch sich die Stützkräfte auf zwei Lager übertragen. Dadurch kann die Schwenklagerung mit dem Verstellmechanismus relativ einfach und leicht ausgeführt werden.

Gemäß Anspruch 2 ist in einer bevorzugten Ausführungsform der längliche Bügel plattenförmig ausgeführt, was eine bevorzugt flächige Abstützung des Beckenbereichs einer Person bewirkt.

Nach Anspruch 3 wird der Bügel in Abhängigkeit vom Fahrzeugzustand vor Beginn der Fahrt von einer Ruhestellung, die ein bequemes Einnehmen der Sitzposition ermöglicht, selbsttätig in die Wirkstellung, die den Beckenbereich abdeckt, bewegt. Umgekehrt wird bei Beendigung der Fahrt das Abstützelement von der Wirkstellung wieder selbsttätig in die Ruhestellung bewegt, so daß ein bequemes Aussteigen ohne Behinderung durch das Abstützelement möglich ist.

Zur Durchführung der selbsttätigen Verstellung des Bügels in die Wirk- bzw. Ruhestellung wird in einer konkreten Ausführung mit Anspruch 4 vorgeschlagen, den Bügel mit bewegungsübertragenden Mitteln, insbesondere einem Seilzug mit der jeweils zugeordneten Fahrzeugtür dergestalt zu verbinden, daß bei geöffneter Fahrzeugtür das Abstützelement in seine Ruhestellung und bei geschlossener Fahrzeugtür in seine Wirkstellung gebracht ist. Damit wird auf einfache Weise ohne bewußt auszuführende Maßnahme durch den Fahrzeuginsassen der Bügel während der Fahrt, d. h. bei geschlossener Fahrzeugtür, in seine Wirkstellung gebracht und dort gehalten. Beim Ein- und Aussteigen durch die geöffnete Fahrzeugtür ist der Bügel zum bequemen Einnehmen und Verlassen des Fahrzeugsitzes in seine Ruhestellung weggeschwenkt.

In einer alternativen Ausführungsform nach Anspruch 5 ist der Bügel mit einem am Fahrzeugsitz angeordneten und ansteuerbaren Elektromotor verbunden.

Vorteilhaft wird dazu nach Anspruch 6 ein ohnehin für eine Sitzverstellung vorhandener Elektromotor in einer Mehrfachfunktion auch für die Verstellung des Bügels verwendet. Dies kann beispielsweise durch eine ansteuerbare Mitnehmerkupplung erfolgen.

Die Verstellung des Bügels soll in Abhängigkeit gewisser Fahrzeugzustände erfolgen. Besonders vorteilhaft wird eine Verstellung in die Wirkstellung gemäß Anspruch 7 beim Schließen der zugeordneten Fahrzeugtür und/oder beim Starten des Motors und/oder in Abhängigkeit von der Belastung eines Sitzflächenschalters durchgeführt. Umgekehrt wird die Verstellung in die Ruhestellung beim Öffnen der Fahrzeugtür und/oder beim Abstellen des Motors und/oder bei der Entlastung eines Sitzflächenschalters durchgeführt. Diese Bedingungen können in zweckmäßiger Art kombiniert werden. Beispielsweise kann die Verstellung in die Wirkstellung durch die Belastung eines Sitzflächenschalters und die Verstellung in die Ruhestellung durch einen Türschalter ausgelöst werden.

Anhand eines Ausführungsbeispiels wird die Erfindung mit weiteren Einzelheiten erläutert.

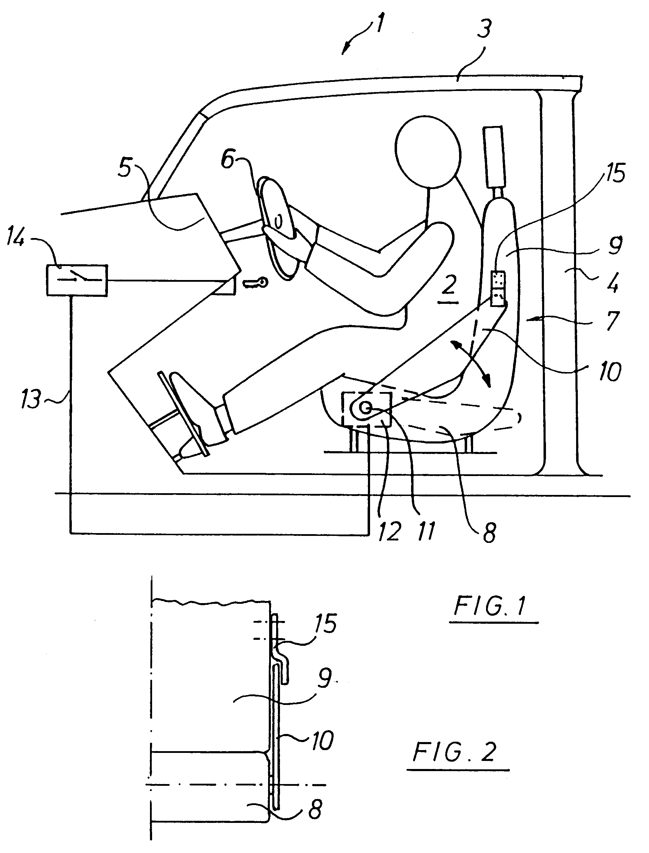

Es zeigen
- Fig. 1: eine schematische Darstellung einer Sicherheitsvorrichtung in einem Kraftfahrzeug und
- Fig. 2: eine Teilansicht mit einem Verhakungselement.

In der Figur ist ein Schnitt durch den vorderen Teil einer Fahrgastzelle 1 im Bereich eines Fahrers 2 mit einem Dachbereich 3, einem B-Pfosten 4, einer Schalttafel 5, einem Lenkrad 6 und einem Fahrzeugsitz 7 dargestellt. Der Fahrzeugsitz 7 besteht aus einem etwa waagrecht liegenden unteren Sitzflächenteil 8 und einem etwa senkrecht stehenden Sitzlehnenteil 9.

Ein als Abstützelement wirkender länglicher, plattenförmiger Bügel 10 ist schwenkbar am Fahrzeugsitz 7 angebracht. Die Schwenkachse 11 ist einerseits am plattenförmigen Bügel 10 an der vorderen Endseite und andererseits im vorderen Bereich des Sitzflächenteils 8 angebracht. In der durchgezogenen Darstellung liegt der Bügel 10 in seiner nach oben geschwenkten Wirkstellung, wobei er den sonst seitlich freien Bereich zwischen dem Sitzflächenteil 8 und dem Sitzlehnenteil 9 dreieckförmig abdeckt und damit den Beckenbereich des Fahrers 2 bei einer seitlichen Bewegung zur angrenzenden Fahrzeugtür hin abstützt. In der strichlinerten Darstellung ist der Bügel 10 in seine Ruhestellung abgeklappt, wodurch der seitliche Bereich zwischen dem Sitzflächenteil 8 und dem Sitzlehnenteil 9 für ein bequemes Einnehmen oder Verlassen des Fahrzeugsitzes 7 freigegeben ist.

Die Schwenkbewegung des Bügels 10 wird über einen ansteuerbaren Elektromotor 12, der am Fahrzeugsitz im Bereich der Schwenkachse 11 angeordnet ist, durchgeführt. Der Elektromotor 12 wird über eine Steuerleitung 13, die mit einer Einheit 14 zur Erkennung des Motorlaufs verbunden ist, derart angesteuert, daß bei laufendem Motor der Bügel 10 in seine Wirkstellung und bei abgestelltem Motor in seine Ruhestellung verstellt wird.

Der Bügel 10 schwenkt mit seinem freien Ende in der Wirkstellung hinter eine Lasche 15. Diese Lasche 15 stützt das freie Ende des Bügels 10 bei einer Krafteinwirkung durch einen Seitenaufprall zur Fahrzeugtür hin ab, so daß das Schwenklager mit der Schwenkachse 11 relativ einfach dimensioniert werden kann, da es nicht die Kraft eines frei abstehenden Bügels 10 aufnehmen muß.

Die dargestellte Anordnung hat folgende Funktion: Wenn der Fahrer 2 bei abgestelltem Motor in das Fahrzeug steigt, liegt der Bügel 10 in seiner nach unten abgeklappten Ruhestellung, so daß das Einnehmen der Sitzposition nicht behindert ist. Wenn der Fahrer anschließend den Motor startet, fährt selbsttätig der Bügel 10 nach oben in seine Wirkstellung, die er während der gesamten Fahrt, bzw. so lange der Motor läuft, beibehält und somit seine Schutzfunktion als dreieckförmige Abdeckung bei einem Seitenaufprall ausführt. Beim Abstellen des Motors schwenkt der Bügel 10 wieder in seine abgeklappte Ruhestellung zurück, so daß der Fahrer 2 bequem sein Fahrzeug ohne Behinderung durch den Bügel 10 verlassen kann. Für die Verstellung von Abstützelementen bzw. Bügeln an Beifahrersitzen kann eine Steuerung über Türkontakte oder Sitzflächenkontakte je nach Gegebenheiten zweckmäßiger sein.

## Patentansprüche

1. Sicherheitsvorrichtung an einem Kraftfahrzeug,
bestehend aus einem länglichen Bügel (10) als Abstützelement, der an einem Ende schwenkbar an der der Fahrzeugtür zugeordneten Seite eines Fahrzeugsitzes gelagert ist und der von einer Ruhestellung in eine Wirkstellung verstellbar ist, wobei der durch eine sitzende Person eingenommene Beckenbereich von der Seite her abgedeckt ist, und die Schwenkachse (11) für den Bügel (10) am vorden Ende des Sitzflächenteils (8) oder im oberen Bereich des Sitzlehnenteils (9) liegt,
dadurch gekennzeichnet,
daß für das der Schwenkachse (11) gegenüberliegende, freie Ende des Bügels (10) ein zugeordnetes Verhakungselement (Lasche 15) am oberen Bereich des Sitzlehnenteils (9) oder am vorderen Ende des Sitzflächenteils (8) angeordnet ist, hinter das das freie Ende des Bügels (10) in der Wirkstellung geführt ist und eingreift.

2. Sicherheitsvorrichtung nach Anspruch 1, dadurch gekennzeichnet, daß der Bügel plattenförmig gestaltet ist.

3. Sicherheitsvorrichtung nach Anspruch 1 oder 2, dadurch gekennzeichnet, daß die Verstellung des Bügels (10) von der Ruhestellung in die Wirkstellung selbsttätig in Abhängigkeit vom Fahrzeugzustand vor dem Beginn der Fahrt durch Stellmittel durchführbar ist und die Wirkstellung während der Fahrt beibehalten wird.

4. Sicherheitsvorrichtung nach Anspruch 3, dadurch gekennzeichnet, daß die zugeordnete Fahrzeugtür über bewegungsübertragende Mittel, insbesondere einen Seilzug, mit dem Bügel (10) dergestalt verbunden ist, daß der Bügel (10) bei geöffneter Fahrzeugtür in seine Ruhestellung und bei geschlossener Fahrzeugtür in seine Wirkstellung selbsttätig gebracht ist.

5. Sicherheitsvorrichtung nach Anspruch 3, dadurch gekennzeichnet, daß der Bügel (10) für seine Verstellung mit einem am Fahrzeugsitz (7) angeordneten und ansteuerbaren Elektromotor (12) verbunden ist.

6. Sicherheitsvorrichtung nach Anspruch 5, dadurch gekennzeichnet, daß der Elektromotor (12) ein ohnehin für eine Sitzverstellung vorhandener Elektromotor (12) ist, der in einer Multifunktion auch für die Verstellung des Bügels (10) verwendet ist.

7. Sicherheitsvorrichtung nach Anspruch 5 oder 6, dadurch gekennzeichnet, daß der Elektromotor (12) zur Verstellung des Abstützelements (10) in die Wirkstellung beim Schließen der zugeordneten Fahrzeugtür und/oder beim Starten des Motors und/oder in Abhängigkeit von der Belastung eines Sitzflächenschalters angesteuert wird.

## Claims

1. Safety mechanism on a motor vehicle,
consisting of an elongate bracket (10) serving as a brace, which is swivel-mounted by one end on the side of a vehicle seat that is located nearest the vehicle door and which can be adjusted from a rest position to an operational position, thereby laterally shielding the pelvic region of a person occupying the seat, and with the swivelling axis (11) for the bracket (10) being situated at the front end of the seat cushion part (8) or in the upper portion of the squab part (9),
characterized in that
for the free end of the bracket (10) situated opposite the swivelling axis (11) there is arranged an associated latching member (shackle 15) on the upper portion of the squab part (9) or at the front end of the seat cushion part (8), behind which the free end of the bracket (10) is guided and engages in the operational position.

2. Safety mechanism according to claim 1, characterized in that the bracket is plate-shaped.

3. Safety mechanism according to claim 1 or 2, characterised in that the adjustment of the bracket (10) from the rest position to the operational position can be performed automatically by final control means in dependence on the status of the vehicle before the journey begins and the operational position is maintained for the duration of the journey.

4. Safety mechanism according to claim 3, characterised in that the associated vehicle door is connected in such a manner to the bracket (10) via motion-transmitting means, more particularly a cable, that the bracket (10) is automatically moved into its rest position when the vehicle door is open, and into its operational position when the vehicle door is shut.

5. Safety mechanism according to claim 3, charactrised in that for its adjustment the bracket (10) is connected to an electric motor (12) arranged and adapted to be activated on the vehicle seat (7).

6. Safety mechanism according to claim 5, characterised in that the electric motor (12) is an electric motor (12) provided in any case for adjusting the seat and which is also used to adjust the bracket (10) as one of its multiple functions.

7. Safety mechanism according to claim 5 or 6, characterised in that the electric motor (12) is activated to adjust the brace (10) into the operational position upon closing the associated vehicle door and/or upon starting the engine and/or in dependence on the loading of a seat cushion switch.

## Revendications

1. Dispositif de sécurité pour véhicule automobile,
se composant d'une bride de forme allongée (10) servant d'élément d'appui, bride qui est montée pivotante par l'une de ses extrémités sur le côte d'un fauteuil du véhicule dirigé vers la porte et qui est mobile entre une position de repos et une position active dans laquelle la région occupée par le bassin d'une personne assise est protégée par le côté, l'axe de pivotement (11) pour la bride (10) étant situé à l'extrémité avant de la partie siège (8) du fauteuil ou dans la région supérieure de la partie dossier (9) du fauteuil,
caractérisé en ce qu'il est disposé, dans la région supérieure de la partie dossier (9) du fauteuil ou à l'extrémité avant de la partie siège (8) du fauteuil, pour l'extrémité libre de la bride (10) à l'opposé de l'axe de pivotement (11), un élément d'accrochage associé (attache 15), derrière lequel l'extrémité libre de la bride (10) est amenée et s'accroche dans la position active du dispositif.

2. Dispositif de sécurité selon la revendication 1, caractérisé en ce que la bride est réalisée sous forme de plaque.

3. Dispositif de sécurité selon la revendication 1 ou 2, caractérisé en ce que le déplacement de la bride (10) entre la position de repos et la position active peut être produit automatiquement par des moyens d'actionnement en fonction de l'état du véhicule avant le début du trajet, et la position active est maintenue pendant le trajet.

4. Dispositif de sécurité selon la revendication 3, caractérisé en ce que la porte associée du véhicule est reliée à la bride (10) par des moyens de transmission de mouvement, en particulier par un câble sous gaine, de telle sorte que, lorsque la porte du véhicule est ouverte, la bride (10) soit placée automatiquement dans sa position de repos et que, lorsque la porte du véhicule est fermée, elle soit placée automatiquement dans sa position active.

5. Dispositif de sécurité selon la revendication 3, caractérisé en ce que la bride (10) est reliée, pour son déplacement, à un moteur électrique (12) qui est monté sur le fauteuil (7) du véhicule et peut être mis en marche automatiquement.

6. Dispositif de sécurité selon la revendication 5, caractérisé en ce que le moteur électrique (12) est un moteur électrique (12) qui est prévu de toute façon pour le réglage du fauteuil et qui est utilisé pour plusieurs fonctions, également pour le déplacement de la bride (10).

7. Dispositif de sécurité selon la revendication 5 ou 6, caractérisé en ce que le moteur électrique (12) est mis en marche pour placer l'élément d'appui (10) dans sa position active lors de la fermeture de la porte associée du véhicule et/ou lors du démarrage du moteur et/ou en fonction de la charge appliquée à un interrupteur prévu sur la partie siège du fauteuil.
